# EUROPEAN PATENT APPLICATION

(11) **EP 4 422 116 A1**
(43) Date of publication of application: **28.08.2024**
(21) Application number: 23158704.9
(22) Date of filing: 27.02.2023
(51) Int. Cl.: H04L 9/00, H04L 9/32

(54) **COMPUTER-READABLE MEDIUM RELATING TO TRUST RELATIONSHIPS BETWEEN A FIRST PARTY AND A SECOND PARTY, SEARCH METHOD, COMPUTER PROGRAM FOR AN ELECTRONIC DEVICE, ELECTRONIC DEVICE, AND FIRST VEHICLE, IN PARTICULAR UTLITY VEHICLE**

(71) Applicant: ZF CV Systems Global GmbH, 3006 Bern (CH)
(72) Inventor: FEYERABEND, Konrad, 30625 Hannover (DE); MEYER-RÖSSLER, Philip, 31180 Giesen (DE); REHM, Florian, 30974 Wennigsen (DE); RUMYANTSEV, Vladislav, 30449 Hannover (DE)
(74) Representative: Schäferjohann, Volker

(57) **Abstract**

A computer-readable medium (50) comprising a mesh (200) with a public key infrastructure relating to trust relationships between a first party (P1) and a second party (P2), wherein the mesh (200) comprises: a first party chain (205) representing the first party (P1) and comprising a first root element (210, 215), a first mesh element (210, 211) and a first element (210); a second party chain (206a) representing the second party (P2) and comprising a second root element (210, 216a) and a second element (210, 218a); wherein each of the root elements (210, 215, 216a) comprises a signature (S) signed by a root certification authority (RCA) of the respective party (P1, P2) and a corresponding root public key (RPK) for validating signatures (S) signed by the corresponding root certification authority (RCA); the first mesh element (210, 211) comprises a signature (S) signed by the root certification authority (RCA) of the first party (P1), a mesh public key (MPK) for validating a signature (S) signed by a mesh certification authority (MCA) of the first party (P1) and a predecessor sibling hash (PSH); the first element (210) comprises a signature (S) signed by the mesh certification authority (MCA) of the first party (P1), the mesh public key (MPK), a predecessor sibling hash (PSH) of a preceding element (210) in the first party chain (205), and a neighbor link (NL) to a second linked element (210, 220a) of the second party chain (206a); the second element (210, 218a) comprises a neighbor link (NL) to a first linked element (210, 219) of the first party chain (205); and the second party chain (206a) further comprises a self-revocation element (210, 230) being a successor of the second linked element (210, 220a) and comprising a self-revocation property (P, SR) and/or the first party chain (205) further comprises a revocation element (210, 235) being a successor of the first element (210, 212) and comprising a revocation property (P, RP).

## Description

The disclosure relates to a computer-readable medium comprising a mesh with a public key infrastructure relating to trust relationships between a first party and a second party. The disclosure further relates to a search method for an electronic device of a first party to search a trust relationship with a second electronic device of a second party, to a computer program for an electronic device, to an electronic device and to a first vehicle in particular utility vehicle, of a first party.

In other words, the disclosure relates to automotive and non-automotive electronically interconnected and/or communicating devices with a demand for a secure communication.

Electronic devices are often operated as part of a network. Typically, devices as units from different manufacturers, as an example of so-called parties, may communicate with each other in such a network. To protect the authenticity, integrity and optionally also the confidentiality of the data in such a network, communication security protection is to be applied. This means that a common root of trust between the parties must be established. Based on the common root of trust, a trust relationship between the parties may be established in order to enable a security protected communication between the devices of the different parties.

An assignment of an overarching authority for provisioning of the root of trust to a plurality of parties is known from the prior art and may be performed in the on-board communication of components of a vehicle. For example, an original equipment manufacturer, OEMs, may equip 3rd party devices with the root certificates of the OEM to establish a chain of trust, mainly to enable secure on-board communication. However, this may not sufficiently cover the use-case for secure external communication, i.e., for communication between devices of different vehicles and/or of different parties.

Typically, each party, e.g., manufacturer, provider and/or supplier of a device, maintains its own public key infrastructure, PKI, with a root certificate authority, RCA, associated with this particular party only. The RCA provides a root public key and a root private key as a pair of keys, wherein the root private key is secret and may be used to sign data, and the root public key is public and may be used to validate data which is signed by the root private key. However, the above-described overarching authority may not be feasible with a plurality of parties, since such an authority would have to operate with a plurality of manufacturers and service providers, potentially worldwide. This would cause an enormous maintenance effort accumulated to the operator of the authority. Also, it could be difficult to prove the neutrality of such an authority. Thus, achieving a commitment of all relevant parties to this authority may be challenging.

In principle, it is imaginable to introduce a global, e.g., a world-wide operating global authority providing the common "root of trust". Even in case of a limitation to an operational area of vehicles, this solution may fail to work due to several practical reasons: First, it requires an enormous effort being concentrated to one organization to maintain trust-relationships combined with time-criticality, e.g., in case of initial accreditations of participants, frequent audits, regular maintenance and/or security incident response. Second, neutrality may be biased, since the authority must provide equal terms and conditions, such as access eligibility, to all possible participants regardless of business dimension, e.g., global OEMs, local OEMs, Tier1s, local supplier, etc., business area, e.g., truck, trailer, smart infrastructure, fleets, digital services, etc., and company location. Third, even due to technical reasons the capabilities of such a global authority might be unbalanced, e.g., as a result of regional differences in the available infrastructure. Thus, it might be difficult to provide valid evidence for neutrality, which may lead to loss of acceptance.

WO 2020/118146 A1 discloses a system, methodologies and components for managing trust across multiple Root Certificate Authorities using both electors and regional Certificate Trust Lists (CTLs).

EP 3 157 281 A1 discloses a method for protected communication by a vehicle.

Furthermore, in principle, a device provision with root certificates of all possible communication counterparts is possible. The disadvantages of this method are: First, periodic in-field updates of the device's security sensitive components may be necessary, wherein, however, the introduction of new root certificates may lead to increased security vulnerability of the entire system. Second, omnipresent in-field impasses may occur due to missing root certificates.

DE 10 2015 220 226 A1 discloses a method for certification by a control unit of a vehicle.

An alternative approach measure to enable an effective communication security protection for the communication between devices of different parties is a mesh with a plurality of elements representing the parties. Such a mesh may be updated with by adding further elements to the mesh in a block chain type manner, i.e., elements may be added to the mesh, but elements may not be removed and/or manipulated after adding the elements to the mesh.

However, such an approach requires a mechanism to revoke a trusted relationship which was introduced by adding elements.

In the prior art, a certificate revocation list, CRL, is introduced to inhibit the trust into a certificate and/or an entire chain of trust within a device, i.e., an entity. However, the distribution of the CRL requires local and/or remote access to the device. The CRL initiates interim countermeasure only, wherein follow-up actions are required, such as a secure in-field installation of new trustworthy certificates. Furthermore, CRL may be based on a provision of a 3rd party certificate in the device, which may be considered as impractical in the alternative approach with the mesh as a common root of trust.

The problem of the disclosure is to provide a technological contribution to the art. A specific embodiment of the present disclosure may solve the problem of providing an alternative measure to enable an effective communication security protection for the communication between devices of different parties while providing the possibility of revoking a trust relationship.

According to an aspect of the disclosure, a computer-readable medium comprising a mesh with a public key infrastructure relating to trust relationships between a first party and a second party is provided. Therein, the mesh comprises: a first party chain representing the first party and comprising a first root element, a first mesh element and a first element; a second party chain representing the second party and comprising a second root element and a second element; wherein each of the root elements comprises a signature signed by a root certification authority of the respective party and a corresponding root public key for validating signatures signed by the corresponding root certification authority; the first mesh element comprises a signature signed by the root certification authority of the first party, a mesh public key for validating a signature signed by a mesh certification authority of the first party and a predecessor sibling hash; the first element comprises a signature signed by the mesh certification authority of the first party, the mesh public key, a predecessor sibling hash of a preceding element in the first party chain, and a neighbor link to a second linked element of the second party chain; the second element comprises a neighbor link to a first linked element of the first party chain; and the second party chain further comprises a self-revocation element being a successor of the second linked element and comprising a self-revocation property and/or the first party chain further comprises a revocation element being a successor of the first element and comprising a revocation property.

Therein, the mesh, also called mesh structure, relates to a data structure of elements. The data structure may be stored on the computer-readable medium. The mesh may provide a common root of trust for the parties being represented and/or are to be represented by elements in the mesh for establishing secured communication between two or more electronic devices of the different parties. The mesh, i.e., the elements of the mesh may be created by the parties.

The elements may be linked to another element of the mesh and/or multiply linked to a plurality of elements of the mesh. An element, also called mesh element, may be the basic data entity. A plurality of elements may build and/or represent the mesh. An element may be a root element, a mesh element or a regular sibling. A link between elements may represent a trust relationship which may be validated.

Each of the first party and the second party may be an organization, such as a company, a subsidiary of a company and/or a company segment, which may be represented in the mesh or intended to be represented in the mesh.

Elements may be organized in a party chain. The party chain may be a linked list of elements representing the same party.

Each of the party chains comprises a root element corresponding to the respective party. The root element of a party chain may be an initial element of the party chain. The root element comprises a signature signed by a root certification authority of the respective party and a corresponding root public key for validating signatures. This enables that each of the parties may maintain its public key infrastructure, PKI.

The first mesh element, or a mesh element in general, may be the element following, i.e., succeeding, the root element of the party chain. Thus, the first root element may be a predecessor of the first mesh element. The first mesh element may be a sibling of the first root element. The first mesh element comprises a signature signed by the root certification authority of the first party, a mesh public key for validating a signature signed by a mesh certification authority of the first party and a predecessor sibling hash of the first root element, i.e., a root hash.

The root hash may enable a validation of the first root element. The signature of the first mesh element may be validated by the root public key of the first party which is comprised by the first root element. Thus, between the first root element and the first mesh element a forgery-proofed relationship may be established by validating the first root element, by the first mesh element, and the first mesh element, by the first root element.

The first element comprises a signature signed by the mesh certification authority of the first party, the mesh public key, a predecessor sibling hash of a preceding element in the first party chain, and a neighbor link to a second linked element of the second party chain; and the second element comprises a neighbor link to a first linked element of the first party chain.

If the first element is a direct successor of the first mesh element, i.e., the first element succeeds the first mesh element directly, the predecessor sibling hash may comprise a hash value of the first mesh element to enable a validation of the first mesh element by the first element. Furthermore, the predecessor sibling hash may enable a validation of an element in the first party chain preceding the first element. Conversely, the first mesh element and/or the element of the first party chain which precedes the first element comprises optionally a link to its successor element in the first party chain, e.g., a sibling link to a direct successor element. This may enable an efficient search of a trust relationship in the mesh.

Thus, elements may be validated in a chain. The validation chain may comprise validating the mesh element and the root element.

Similarly, the neighbor link to the second linked element of the second party chain represents a trust relationship between the parties, since the neighbor link represents a trust relationship between elements of different party chains which represent different parties. Conversely, the second element comprises the neighbor link to the first linked element of the first party chain. The first linked element may be any of the elements of the first party chain. Optionally, the first linked element is the last element of the first party chain. The neighbor links enable a validation of a relationship between the parties. The second linked element may be a root element, a mesh element or a regular sibling.

The mesh provides, by its structure, which may comprise the links between the elements, the hashes, the signatures of the elements and a root certificate in the one-time-programmable memory of a device referenced by a public key, security characteristics, such as integrity and authenticity protection, non-repudiation of the particular entries and the possibility of secure offline and/or infield synchronization, even from untrusted sources. This may be achieved by a combination of public key cryptography, a block chain type principle, wherein elements within the mesh are static and may not be modified and new trust relationships may be established by creating elements within the mesh and enables a peer-to-peer data synchronization approach. The evidence of trusted relationships between participating parties reflects the "real world" trust topology.

However, if any trusted relationship between participating parties within the mesh has been compromised and/or is deemed to be compromised by a participating party, the corresponding trust relationship representation in the mesh needs to be revoked. Since the mesh applies a hash-based block chain type data protection approach, it is not possible to modify existing elements without compromising the integrity of the entire mesh. Therein, the trust relationship may be compromised and/or be deemed to be compromised based on objective and/or subjective grounds. Such a ground may be if a security breach has occurred, a private key has been disclosed unwillingly, processes and/or documentations are not sufficient, etc.

This disclosure has realized that it is possible to introduce a new "inhibit" element which may be applied to the mesh in order to countermand the elements indicating the compromised relationship. For this reason, the second party chain may comprise the self-revocation element with the self-revocation property. I.e., the self-revocation element is an element of the mesh which comprises a property with a self-revocation tag, called self-revocation property. The self-revocation property may indicate that an element and/or any element between an element of the second party chain directly and/or indirectly via other elements preceding the self-revocation element and the second root element and including the element of the second party chain preceding the self-revocation element may represent a compromised trust relationship. In particular, the self-revocation element is a successor, either direct or indirect, of the second linked element. Thus, when a trust relationship between the parties is searched, the self-revocation element may be found in the second party chain, and a trust relationship based on the second linked element may thus be revoked. This may enable that a violation of a trusted relationship may result in an appropriate sanction, e.g., canceling the whole trusted relationship or some of its specific aspects. The introduction of the self-revocation element provides an effective tool to handle violations of the trusted relationships. Similarly, the first party chain may comprise the revocation element. The revocation element is a successor, either direct or indirect, of the first element and comprises the revocation property. I.e., the revocation element is an element of the mesh which comprises a property with a revocation tag, called revocation property. The revocation property may indicate that an element between an element of the first party chain preceding the revocation element and the first root element may link to a compromised element of the second party chain and may thus represent a compromised trust relationship and/or a trust relationship which is deemed to be compromised.

With this mechanism it is possible to address the revocation of a certificate authorities, a particular certificate and/or general security vulnerabilities of the device families. Furthermore, this is achieved without countermanding any potentially trusted relationship to the other party as a whole.

Optionally, the first mesh element may be dispensed with to achieve a simpler mesh. However, then the first root element may not be validatable.

Optionally, the second element may be dispensed with so that the second party chain may consist of the second root element and the self-revocation element. This may achieve a simpler mesh but may be require different operations to maintain the mesh, e.g., if the root certificate authority of the second party revisions its public and private keys.

Optionally, the self-revocation element comprises a void neighbor link, a void neighbor root link, a void neighbor hash and/or a void neighbor root hash. This enables that the self-revocation element may have the same structure as any other element of the mesh, wherein the neighbor link, the neighbor root link, the neighbor hash and/or the neighbor root hash is void, i.e., the neighbor link and/or the neighbor root link is not set to link the self-revocation element to another element of another party chain and/or the neighbor hash and/or the neighbor root hash are not set according to a hash of an element of another party chain. This further achieves that a search of a trust relationship may not lead from over a party chain with a revoked trust relationship to another party chain which may be trustworthy. Alternatively, the self-revocation element does not comprise a neighbor link, a neighbor root link, a neighbor hash and/or a neighbor root hash. This may simplify the structure of the self-revocation element but may require a different declaration and different operations for self-revocation element compared to other elements.

Optionally, the revocation element comprises a neighbor link to the second linked element and/or a neighbor root link to the second root element. This may enable an efficient search of a trust relationship or a compromised relationship due to an element which represents a compromised trust relationship. Therein, the neighbor link of the revocation element may explicitly identify the element of the second party chain which represents a compromised trust relationship.

Optionally, the second party chain comprises a trusted second element with a neighbor link to any element of the first party chain and/or the first party chain comprises a trusted first element with a neighbor link to a trusted second element of the second party chain. The trusted first element and/or the trusted second element may be a mesh element or a regular sibling. The trusted first element and/or the trusted second element may be trustworthy and may thus be introduced to re-establish a trust relationship.

Optionally, the second party chain comprises a trusted second element with a neighbor link to any element of the first party chain, and the trusted second element is a last element of the second party chain, a mesh element and/or a successor of the self-revocation element. The last element of a party chain is typically the element of the party chain which is created most recently. Thus, a link to the last element of the party chain reflects to most recent trust relationship. The mesh element may be a basis for a trusted relationship, in particular if the mesh element succeeds the self-revocation element. The successor of the self-revocation element may enable establishing a trusted relationship between the parties.

Optionally, the second party chain comprises a trusted second element with a neighbor link to the revocation element. This may enable that the previous revocation of the trust relationship by the revocation element is acknowledged by the second party.

Optionally, the self-revocation element comprises a signature signed by the root certification authority of the second party and a corresponding root public key for validating signatures signed by the root certification authority of the second party.

Thus, between the second root element and the self-revocation element a forgery-proofed relationship may be established by validating and the self-revocation element, by the public key of the second root element.

Optionally, the revocation element with a signature signed by the mesh certification authority of the first party and a corresponding mesh public key for validating signatures signed by the mesh certification authority of the first party. Thus, between the first mesh element and the revocation element a forgery-proofed relationship may be established analogously to the validation of a regular sibling, namely by validating the signature by a validated mesh element.

According to an aspect of the disclosure, a search method for an electronic device of a first party to search a trust relationship with a second electronic device of a second party, wherein the electronic device comprises a memory storing a mesh as being comprised by the computer-readable medium as described above is provided. Therein, the search method comprises: iterating, starting with the first root element of the mesh, through the first party chain; following any neighbor link of the elements of the first party chain to second elements of the second party chain; storing, as a trust list, validated second elements of the second party chain; removing, from the trust list, any information relating to an element of the second party chain preceding the self-revocation element of the second party chain and/or relating to a second element of the second party chain being linked by a revocation element of the first party chain; and outputting a trust relationship result.

Therein, the mesh may be considered as an input to the method. I.e., the method may be performed on a data structure that represents the mesh and that may be stored on a computer-readable medium. The trust relationship result may be of a Boolean type, i.e., the trust relationship result may characterize whether a trust relationship is found and may be established between two devices, or none trust relationship is found.

The search method is an operation that may identify direct, i.e., between neighboring party chains, or indirect, i.e., over at least one intermediate party chain, a trusted relationship between parties by identifying the linkage, i.e., a link and/or a link chain, between a root-element of the first party and an element of the second party. The method may apply a breadth-first search, i.e., instead of first following the neighbor links to elements of neighboring party chains, through one of the party chains is iterated first. This may enable to first assess more trustworthy relationships between parties being represented by directly neighboring party chains than to assess relationships with potentially next-nearest neighbors, next-next-nearest neighbors and so on. The method may start with the first root element.

Iterating through the first party chain means that as a first step the first party chain will be processed by following the sibling links. By following neighbor links and neighbor root links of each element, the pairs of elements of the second party chain and the second root element will be validated. Therein, validation may include hash, signature and/or element parameter evaluation.

Found pairs, i.e., validated second elements being linked to validated elements of the first party chain and the second root element of the second party chain, may be stored into an intermediate result collection, i.e., the trust list.

If an element with a self-revocation property is found in the party chain, all elements of this party chain found before will be removed from the trust list. If the second party appears in the trust list, the operation scans the rest of the corresponding party chain for a self-revocation element. If such an element is found, all elements of the same party-chain found before will be removed for the trust list. Otherwise, the operation continues with chain of trust validation of the communication partner starting with root certificate and following the certificate chain until the device certificate. If this validation step is successful, operation returns "TRUE" as a trust relationship result. If the sought element has not been found yet, the operation will be applied to each party chain which elements are part of the trust list as iterative operation. The search terminates with result "FALSE" as a trust relationship if all elements of the current party chain has been processed and the trust list is empty.

The search method may comprise one or more optional features relating to one or more optional features as described above with reference to the mesh to achieve a corresponding technical effect.

Optionally, when iterating through the first party chain, the method may comprise validating elements of the first party chain. This may enhance the security, since a conflict in the first party chain may be discovered.

Optionally, when validating the second elements of the second party chain, elements of the first party chain are validated. This may enhance the integrity of the mesh if new links between neighbor elements are to be generated.

Optionally, the method further comprises: iterating, starting from an element succeeding the self-revocation element of the second party chain, through the second party chain, and/or iterating, starting from an element succeeding a revocation element of the first party chain, through the first party chain. When iterating, starting from the element succeeding the self-revocation element and/or starting from the element succeeding the revocation element, the above-described method steps are performed. This enables that the trust list, after information is being removed, may be repopulated by storing validated second elements of the second party chain succeeding the self-revocation element and/or being linked by an element of the first party chain succeeding the revocation element of the first party chain.

Optionally, the mesh comprises a plurality of more than two party chains, wherein the following of the neighbor link of the elements of the first party chain to second elements of the second party chain is succeeded by following of the neighbor link of the elements of the second party chain to third elements of a third party chain representing a third party. This enables the search method to identify an indirect, i.e., over at least one intermediate party chain, trusted relationship between parties by identifying the linkage, i.e., the link and/or link chain, between a root-element of the first party and an element of the third party.

According to an aspect of the disclosure, a computer program for an electronic device, is provided. Therein, the computer program comprises instructions which, when the program is executed by a processor, causes the processor to carry out the search method as described above. Optionally, the computer program comprises instructions which, when the program is executed by a processor, causes the processor to realize one or more optional features of the search method relating to one or more optional features as described above with reference to the mesh to achieve a corresponding technical effect.

According to an aspect of the disclosure, an electronic device is provided. The electronic device comprises and/or is adapted to read a computer-readable medium comprising a mesh as described above. Optionally, the mesh comprises one or more optional features as described above with reference to the mesh to achieve a corresponding technical effect.

The electronic device may be a device of the first party and may, by using the mesh, be interconnected to an electronic device of the second party, to a digital service provider of the second party, to a smart infrastructure of the second party, to a fleet operator of the second party and/or to a governmental authority being provided by a second party. By using the mesh as a common root of trust, the mesh reflects that for such an interconnection, the fulfillment of the trust criteria may be reviewed, such as security processes, policies, PKI and/or tools are verified, a security incident response process is established, an access restriction to the sensitive areas may be guaranteed. The mesh may then grant an admission to the opposite party for the interconnection, optionally based on a contractual agreement, which may contain obligations for both parties, e.g., frequent reports and audits and/or incident response commitment.

Optionally, the electronic device is adapted to perform the search method as described above. Optionally, the electronic device is adapted to perform in-field operations, such as validating the mesh, updating the mesh, merging meshes, searching trusted relationship, e.g., by a breadth-first search, authenticate a communication partner, providing a secure communication setup, e.g., based on confidence in trusted party and its chain of trust, validating the certificate chain up to device certificate, initiating challenge (private key ownership) and/or exchange symmetric key.

According to an aspect of the disclosure a first vehicle, in particular utility vehicle, of a first party is provided. Therein, the first vehicle, in particular utility vehicle, comprises an electronic device as described above. The electronics device may comprise one or more features as described above to achieve a technical effect corresponding therewith.

The first vehicle of the first party may interconnect its electronic device with an electronic device of a second vehicle of a second party. For example, the first vehicle may be a truck and the second vehicle may be a trailer. Each of the truck and the trailer may comprise such an electronic device from different parties. The mesh may be used for a truck-trailer link, i.e., for bringing together a number of trucks, e.g. OEM, and a number of trailers, e.g., OEM and Tier1, for secured communication between truck and trailer. Alternatively or additionally, the first vehicle enables a secure communication between the electronic devices and a digital service provider, e.g., via a V2X connection, e.g., V2V, smart infrastructure and/or a fleet application. The disclosure is hereinafter described in detail with reference to the appended drawings, in which:
- Fig. 1: shows a schematic representation of a trust relationship between two parties;
- Fig. 2: shows a mesh as being comprised by a computer-readable storage medium according to an aspect of the disclosure;
- Fig. 3: shows a mesh as being comprised by a computer-readable storage medium according to an aspect of the disclosure;
- Fig. 4: shows a schematic of each of a root element, of a mesh element and of a regular sibling, of a self-revocation element and of a revocation element of a mesh as being comprised by a computer-readable storage medium according to an aspect of the disclosure; and
- Fig. 5: shows a schematic of a search method according to an aspect of the disclosure.

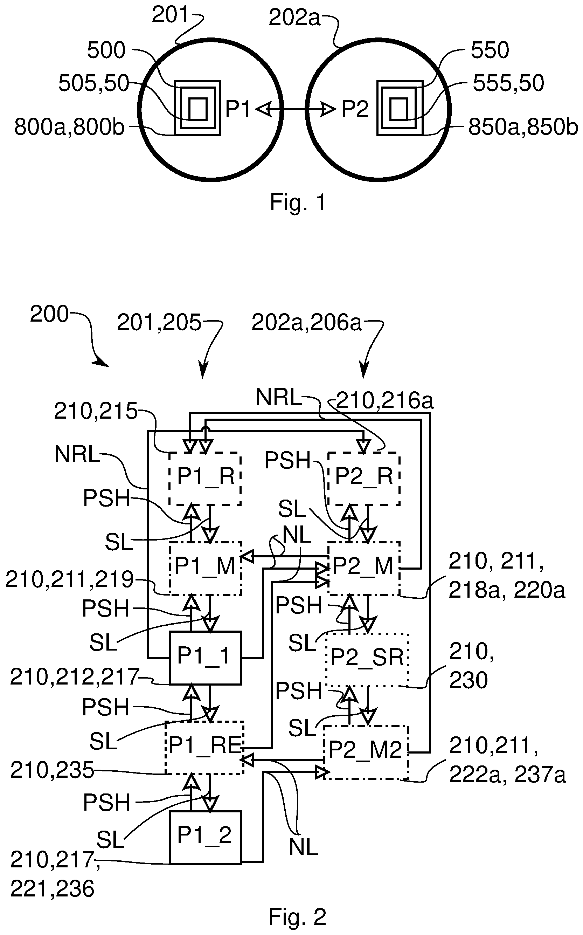

Figure 1 shows a schematic representation of a trust relationship between two parties P1, P2. A party P1, P2, is an organization, e.g., a company, a subsidiary, and/or a segment thereof, which is represented in a mesh 200 or intended to be represented in the mesh 200. The mesh 200 may represent the trust relationship between the parties P1, P2.

Each of the parties P1, P2 may manufacture, maintain and/or provide an electronic device 500, 550 with a memory 505, 555. Each of the electronic device 500, 550 may store on its a memory 505, 555 as a computer-readable medium 50 the mesh 200. The trust relationship which is represented by the mesh 200 represents a cyber security measure for a communication connection and/or an interoperability between the electronic devices 500, 550.

The electronic devices 500, 550 may be comprised by a vehicle 800a, 850a, in particular utility vehicle 800b, 850b. In the following, a vehicle 800a, 850a, in particular utility vehicle 800b, 850b, is referred to as vehicle 800a, 800b, 850a, 850b. I.e., a first electronic device 500 is comprised by a first vehicle 800a, 800b and a second electronic device 550 is comprised by a second vehicle 850a, 850b.

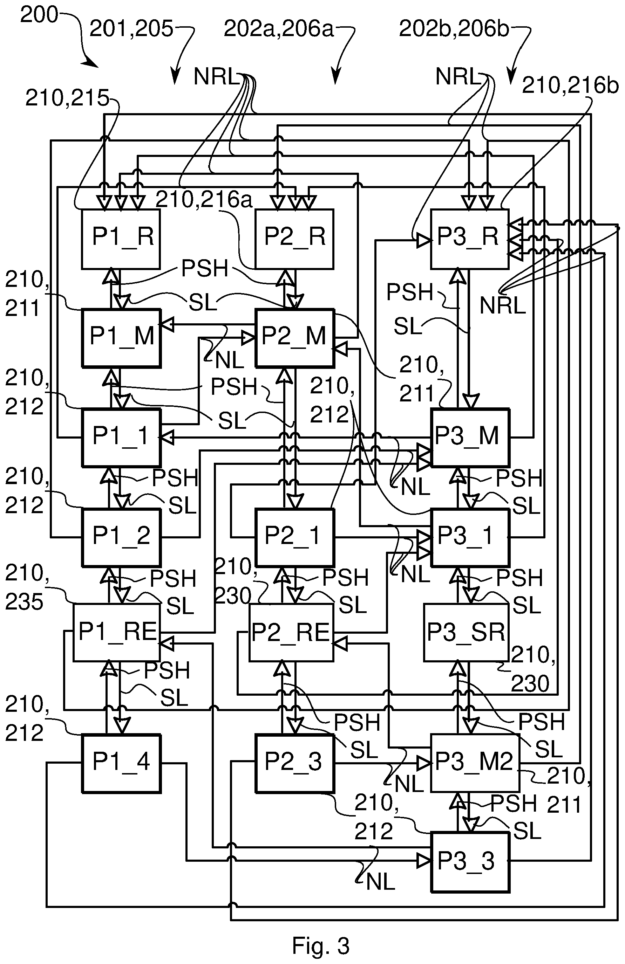

Each of the vehicles 800a, 800b, 850a, 850b is a land vehicle. The first vehicle 800a, 800b is a truck. The second vehicle 850a, 850b is a trailer. Each of the first vehicle 800a, 800b and second vehicle 850a, 850b comprises one of the electronic devices 500, 550 which stores the mesh 200 as described with respect to Figures 2 and 3.

A first party P1 is a host party 201 and a second party P2 is a guest party 202a (see Figure 2). In another embodiment, see Figure 3, the mesh 200 represents trust relations between three parties P1, P2, P3. In general, a mesh 200 may represent trust relations between any number of parties P1, P2, P3.

The mesh 200 is described with reference to Figures 2 and 3.

Figure 2 shows a mesh 200 as being comprised by a computer-readable storage 50 medium according to an aspect of the disclosure. Figure 2 is described under reference to Figure 1 and the description thereof.

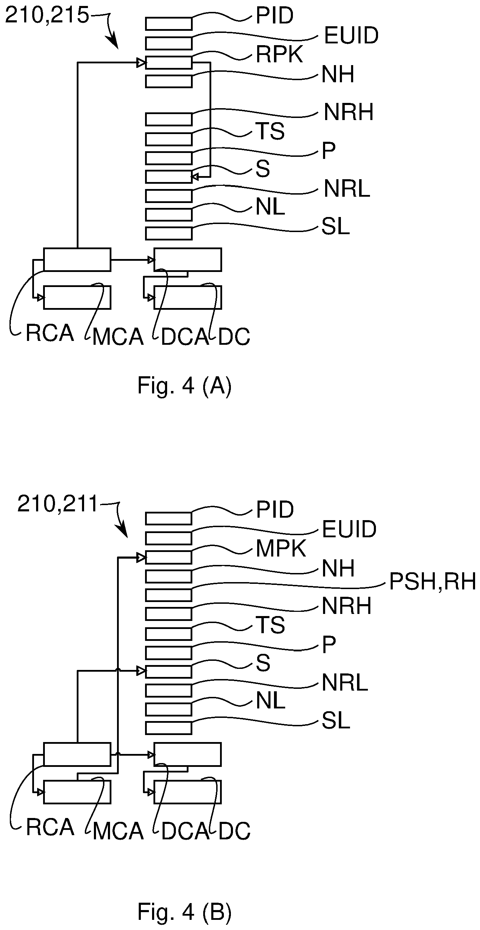

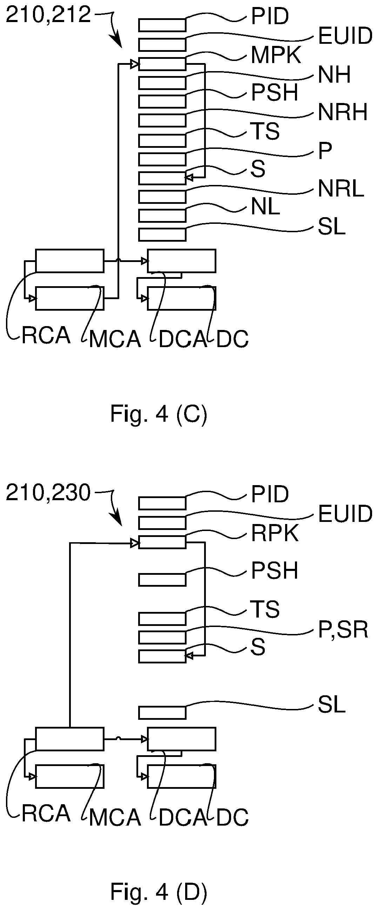

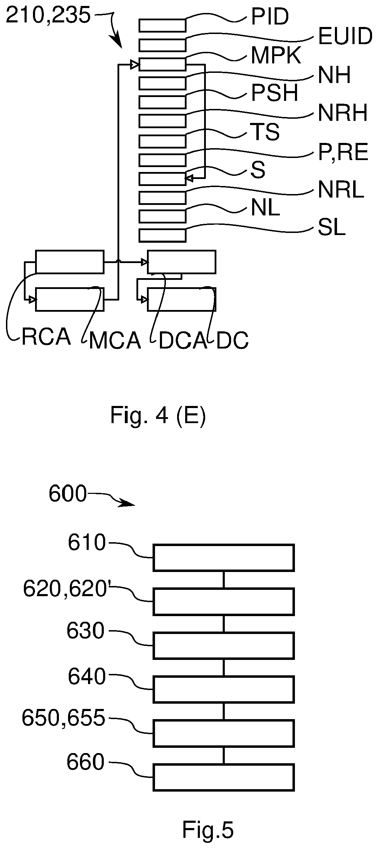

In Figure 2, the mesh 200 comprises a plurality of elements 210, each of which is illustrated by a box with an index. The elements 210 are the basic data entities building the mesh 200. The mesh 200, also called mesh structure, is a data structure of potentially multiply-linked elements 210, i.e., elements 210 that are linked between one or more other elements 210 of the mesh 200. The elements 210 are further explained with reference to Figure 4.

In Figure 2, each of the parties P1, P2 as described with reference to Figure 1 is represented in the mesh 200 by a plurality of elements 210. Therein, each one of the elements 210 represents one of the parties P1, P2. In this representation, elements 210 which belong to the same of the parties P1, P2 are illustrated within the same column. The index of each of the elements 210 is representative for the party P1, P2.

Elements 210 may be comprised by a party chain 205, 206a. The party chain 205, 206a is a linked list of mesh elements 210 representing the same party P1, P2. A linked list is an ordered set of elements 210. Thus, each element 210 may have a well-defined direct predecessor and direct successor within the party chain 205, 206a. In the following, the direct predecessor and direct successor are called predecessor and successor, respectively. Furthermore, each of the party chains 205, 206a comprises a well-defined last element 221, 222a, i.e., an element 210 having no successor.

All elements 210 within the party chain 205, 206a are characterized by the same party ID, PID (see Figure 4). Each of the elements 210 is a root element 210, 215, 216a, a mesh element 210, 211, a regular sibling 210, 212, a self-revocation element 210, 230 or a revocation element 210, 235 (see also Figure 4). This is also represented in the index of each of the elements 210, i.e., a root element 210, 215, 216a is indexed by "_R", a mesh element 210, 211 is indexed by "_M", a regular sibling 210, 212 is indexed by an additional number, a self-revocation element 210, 230 is indexed by "_SR" and a revocation element 210, 235 is indexed by "_RE". In the representation of Figure 2, the party chains 205, 206a are shown in columns.

The first party chain 205 represents the first party P1 and comprises a first root element 210, 215, a first mesh element 210, 211, a first element 210, 217, a revocation element 210, 235, and a trusted first element 210, 236 being a regular sibling 210, 212 and the last element 221 of the first party chain 205.

The second party chain 206a represents the second party P2 and comprises a second root element 210, 216a, a second element 218a being a mesh element 210, 211, a self-revocation element 210, 230, and a last element 210, 222a of the second party chain 206a being a mesh element 210, 211 and a trusted second element 237a.

Therein, each of the root elements 210, 215, 216a is an initial element 210 of the respective party chain 205, 206a, i.e., an element 210 without a predecessor, and comprises a signature S signed by a root certification authority RCA of the respective party P1, P2 and a corresponding root public key RPK for validating signatures S. I.e., the first party chain 205 comprises a first root element 215 with a signature S signed by a first root certification authority RCA of the first party P1 and the second party chain 206a comprises a second root element 216a with a signature S signed by a second root certification authority RCA of the second party P2.

The mesh elements 210, 211 are elements 210 of the party chain 205, 206a following the root element 210, 215, 216a of the respective party chain 205, 206a. I.e., the root element 210, 215, 216a is a predecessor of a corresponding mesh elements 211, either a direct predecessor or a predecessor via one or more intermediate siblings, i.e., elements 210. The mesh element 211 is a successor and a sibling of the root element 210, 215, 216a of the respective party chain 205, 206a. The root element 201, 215, 216a of the party chain 205, 206a is trustworthy due to a root certificate relating to the corresponding root certification authority RCA and being stored in a one-time-programmable memory 505, 555 of the respective electronic device 500, 550. A hash, optionally a root hash RH, further prevents a manipulation and/or replacement of the root element 210, 215, 216a, also by the party P1, P2 being represented by the root element 210, 215, 216a, and enables the principle of non-deniability.

The mesh elements 210, 211 comprises a signature S signed by the root certification authority RCA of the respective party P1, P2, a mesh public key MPK for validating a signature S signed by a mesh certification authority MCA of the respective party P1, P2 and a predecessor sibling hash PSH of the root element 210, 215, 216a of the respective party chain 205, 205a. In particular, the first mesh element 210, 211 comprises a signature S signed by the root certification authority RCA of the first party P1, a mesh public key MPK for validating a signature S signed by a mesh certification authority MCA of the first party P1 and a predecessor sibling hash PSH of the first root element 210, 215. Analogously, the second mesh element 210, 211 comprises a signature S signed by the root certification authority RCA of the second party P2, a mesh public key MPK for validating a signature S signed by a mesh certification authority MCA of the second party P2 and a predecessor sibling hash PSH of the second root element 210, 216a.

The first element 210, 217 is a regular sibling 210, 212. The regular siblings 210, 212 are elements 210 of respective party chain 205, 206a besides the root element 210, 215, 216a, the mesh element 210, 211, the self-revocation element 210, 230 and the revocation element 210, 235. The first element 210, 217 as a regular sibling 210, 212 comprises a signature S signed by the mesh certification authority MCA of the first party P1, the mesh public key MPK, a predecessor sibling hash PSH of a preceding element 210 in the first party chain 205, and a neighbor link NL to a second linked element 220a of the second party chain 206a. The second linked element 220a is the second element 210, 218a of the second party chain 206a and the mesh element 210, 211 of the second party chain 206a which directly succeeds the second root element 210, 216a.

The first element 210, 217 comprises a neighbor root link NRL to the second root element 216a. The first element 210, 217 comprises a neighbor link hash NLH of the second linked element 220a and a neighbor root hash NRH of the second root element 216a.

The second element 210, 218a comprises a neighbor link NL to a first linked element 210, 219 of the first party chain 205. The first linked element 210, 219 is the mesh element 210, 211 of the first party chain 205. The second element 210, 218a comprises a neighbor root link NRL to the first root element 215. The second element 210, 218a comprises a neighbor link hash NLH of the first linked element 219 and a neighbor root hash NRH of the first root element 215.

Each of the first root element 210, 215, the second root element 210, 216a and the first mesh element 210, 211 comprises a sibling link SL. The sibling link SL links an element 210 to its successor element 210. Also, a regular sibling 210, 212, a self-revocation element 210, 230 and/or a revocation element 210, 235 may comprise a sibling link SL to its successor element 210.

The described links and hash values enable a validation of the relationships within the mesh 200. The links and hashes within one of the party chains 205, 206a may enable to validate the integrity of the respective party chain 205, 206a. The links and hashes to the neighboring party chain 205, 206a enables searching and validating relationships between the parties P1, P2.

In the exemplary illustration of Figure 2, a trust relationship between the first party P1 and the second party P2 is compromised. The compromised trust relationship is represented by the neighbor links NL between the second element 210, 218a and the first linked element 219 and between the first element 210, 217 and the second linked element 210, 220a. However, the above-mentioned links and relationship is not removable from the mesh 200. Thus, additional elements 210 are introduced and/or concatenated to the mesh 200 to revoke the above-described trust relationship.

For this reason, the second party chain 206a further comprises a self-revocation element 210, 230. Such a self-revocation element 210, 230 is described with reference to Figure 4 (D). In Figure 2, the self-revocation element 210, 230 is a successor of the second linked element 210, 220a and comprises a self-revocation property P, SR. The self-revocation property P, SR may indicate that a trust relationship which may be established based on an element 210 and/or any element 210 preceding the self-revocation element 210, 230 is to be revoked. The self-revocation element 210, 230 comprises a void neighbor link NL and/or a void neighbor root link NRL. Conversely, there is no element 210 in the first party chain 205 that links via a neighbor link NL to the self-revocation element 210, 230. Thus, the self-revocation element 230 may not be used to establish a trust relationship between different parties P1, P2. The self-revocation element 210, 230 comprises a signature S signed by the root certification authority RCA of the second party P2 and a corresponding root public key RPK for validating signatures S signed by the root certification authority RCA of the second party P2.

The first party chain 205 comprises a revocation element 210, 235. Such a revocation element 210, 235 is described with reference to Figure 4 (E). In Figure 2, the revocation element 210, 235 is a direct successor of the first linked element 210, 219 and an intermediate successor of the first element 210, 212 via the first linked element 210, 219. The revocation element 210, 235 comprising a revocation property RP. The revocation property RP may indicate that a trust relationship which may be established based on an element 210 preceding the revocation element 210, 235 is to be revoked. The revocation element 210, 235 comprises a neighbor link NL to the second linked element 210, 220a and a neighbor root link NRL to the second root element 210, 216a. Thus, the revocation element 210, 235 indicates with its link to the compromised second element 210, 218a that the trust-relationship between the parties P1, P2 is to be revoked. The revocation element 210, 235 comprises a signature S signed by the mesh certification authority MCA of the first party P1 and a corresponding meshpublic key MPK for validating signatures S signed by the mesh certification authority MCA of the first party P1.

To establish a trusted-relationship and/or to re-establish the trusted relationship between the parties P1, P2, the second party chain 206a comprises a trusted second element 210, 237a with a neighbor link NL to any element 210 of the first party chain 205. In this example, the trusted second element 210, 237a comprises a neighbor link NL to the revocation element 210, 235. The first party chain 205 comprises a trusted first element 210, 236 with a neighbor link NL to the trusted second element 210, 237a of the second party chain 206a. The trusted second element 210, 237a is a last element 210, 222a of the second party chain 206a and a mesh element 210, 211.

Each of the self-revocation element 210, 230, the revocation element 210, 235, the first element 210, 217 and the second element 210, 218a comprises a sibling link SL. The sibling link SL links an element 210 to its successor element 210.

The described links and hash values enable a revocation of a trust relationship between the parties P1, P2 being represented by the elements 210 of the party chains 205, 206a and the establishment of a trusted relationship between the parties P1, P2 being represented by the elements 210 of the party chains 205, 206a.

A new trusted relationship in the mesh 200 requires at least one involved party P1, P2 which is already the part of the mesh 200, this is the so-called host party 201. The new attendee, i.e., an attendee being represented by a new element 210, is then considered as guest party 202a. If both parties P1, P2 are already represented in the mesh, an alignment between the parties P1, P2 can be met, e.g., the party P1 with more regular siblings 210, 212 becomes the host party 201 and the party P2 with less regular siblings 210, 212 becomes the guest party 202a.

However, mesh operations, such as adding new elements 210 and updating the mesh 200 accordingly, may require significant memory resources. Low-performance devices with limited memory resources might not be able to participate on the approach. Different strategies may be applied to reduce the memory consumption of the method: the mesh operations may be performed by a high performance computing, HPC, unit of the vehicle 800a, 800b, 850a, 850b and/or a gateway device with enhanced memory resources, the mesh operations may be executed as remote service located on the HPC unit and/or gateway, the mesh 200 may be stored on the HPC unit and/or gateway, the mesh 200 may be limited, i.e., the number of elements 210 in the mesh may be limited by storing only the own party chain 205, 206a, 206 and/or a relevant mesh-path, i.e. linked subset of the mesh 200 starting with the limited device' root element 210, 215 provided by the communication partner. However, a limited mesh 200 may not participate on the mesh updates dispersion. Alternatively, it is possible to maintain the full mesh 200 on the limited device, but reduce stored 3rd party mesh elements 210 to links, hash values and properties.

Figure 3 shows a mesh 200 as being comprised by a computer-readable storage medium 50 according to an aspect of the disclosure. Figure 3 shows a mesh 200 with elements 210 that represent three parties P1, P2, P2. Figure 3 is described under reference to Figure 2 and the description thereof, wherein differences are explained.

In Figure 3, the first party P1 is the host party 205, the second party P2 is the guest party 206a, a third party P3 is a guest party 206b for the first party P1, and P2 is a host party for the third party P3. Since the trust relationship between the parties P1, P2, P3 is more complex than the trust relationship between the parties P1, P2 of Figure 2, the mesh 200 in Figure 3 comprises more elements 210 and correspondingly more links between the elements 210. The third party P3 is represented by elements 210 in a third party chain 206b, analogous to the first party chain 205 and the second party chain 206a.

Each of the second party chain 206a and third party chain 206b comprises a root element 210, 216a, 216b, a mesh element 210, 211 and a single regular sibling 210, 212. Therein, each of the mesh elements 210, 211 links the respective party chain 206a, 206b to the first party chain 205 and the regular sibling 210, 212 links the respective party chain 206a, 206b to the other guest party chain 206b, 206a.

The third party chain 206b comprises a self-revocation element 210, 230 and each of the first party chain 205 and the second party chain 206a comprises a revocation element 210, 235. I.e., the third party P3 may give rise to a revocation of trust relationships with each of the first party P1 and the second party P2.

Each of the elements 210, except the self-revocation element 210, 230 in the third party chain 206b, comprises a single neighbor link NL and a single neighbor root link NRL. Thus, the first party chain 205 comprises two regular siblings 210, 212 preceding the revocation element 210, 235 to provide links to elements 210 of the neighboring party chains 206a, 206b. The second party chain 206a comprises, preceding the revoke element 210, 235 the mesh element 210, 211 directly succeeding the second root element 216a and a regular sibling 210, 212 to provide links to elements 210 of the neighboring party chains 205, 206b. The third party chain 206b comprises, preceding the self-revoke element 210, 230 the mesh element 210, 211 directly succeeding the third root element 216b and a regular sibling 210, 212 to provide links to elements 210 of the neighboring party chains 205, 206a. This provides a trust relationship between the three parties P1, P2, P3.

The trust relationship between the three parties P1, P2, P3 is revoked by the self-revoke element 210, 230 of the third party chain 206b which is, in this example, reflected by the revoke elements 210, 235 of the first party chain 205 and of the second party chain 206a. A trust relationship between the three parties P1, P2, P3 is (re-)established by elements 210 succeeding the self-revoke element 210, 230 and linking to the other party chains 205, 206a and by elements 210 of the other party chains 205, 206a being linked to the elements 210 succeeding the self-revoke element 210, 230.

Specifically, the above-described structure is rebuild. Thus, the first party chain 205 comprises two elements 210, namely the revocation element 210, 235 and the element 210, 212 succeeding the revocation element 210, 235, to provide links to elements 210 of the neighboring party chains 206a, 206b succeeding the self-revocation element 210, 230 and elements 210 of the second party chain 206a linking to elements 210 of the third party chain 206b and succeeding the self-revocation element 210, 230. The second party chain 206a comprises two elements 210, namely the revocation element 210, 235 and the element 210, 212 succeeding the revocation element 210, 235, to provide links to elements 210 of the neighboring party chains 205, 206b succeeding the self-revocation element 210, 230 and elements 210 of the first party chain 205 linking to elements 210 of the third party chain 206b and succeeding the self-revocation element 210, 230. The second party chain 206a comprises two elements 210, namely the revocation element 210, 235 and the element 210, 212 and being a mesh element 210, 211 succeeding the revocation element 210, 235, to provide links to elements 210 of the neighboring party chains 205, 206b to the revocation elements 210, 235 and elements 210, 212 succeeding the revocation element 210, 235.

In other words: in case any trusted relationship documented inside the mesh has been compromised, e.g., due to security breach, this relationship representation in the mesh 200 needs to be revoked. Since the mesh 200 applies hash-based block chain type data protection approach, it is not possible to modify existing elements without compromising the integrity of the whole structure. Therefore, the self-revocation element 210, 230 is introduced to the mesh 200 as a "inhibit" element in order to countermand the elements 210 indicating the compromised relationship.

Figure 3 shows the revocation of trust-relationships to compromised party P3 by parties P1, P2 as well as self-revocation of the third party chain 206b by the third party P3. After the breach has been fixed and, for example, a new Mesh CA key pair for the third P3 has been generated, the third party P3 starts to re-establish trusted relationships with the other parties P1, P2. Therefore, the mesh element 210, 211 P3_M2 with the new Mesh CA Public key as well as neighbor links NL and neighbor root links NRL to the second party chain 206a is generated. The neighbor link NL of the mesh element 210, 211 P3_M2 connects to the revocation element 210, 230 of the second party chain 206a to acknowledge the previous revocation by the second P2. The second party P2 replies with the regular sibling 210, 212 P2_3. To connect the third party chain 206b to the first party chain 205, P3 generates the regular sibling 210, 212 P3_3 with corresponding linkage, wherein the neighbor link NL connects to revocation element 210, 235 of the first party chain 205. The first party P1 replies with the regular sibling 210, 212 P1_4.

In another embodiment (not shown), a trust relationship may be revoked unilaterally by one of the parties P1, P2, P3. The trust relationship may be revoked by one of the parties P1, P2, P3 by a revocation element 210, 235 linking to a party chain 205, 206a, 206b of a neighboring party P1, P2, P3. However, the neighboring party P1, P2, P3 being linked by the revocation element 210, 235 may not necessarily comprise a self-revocation element 210, 230 to maintain a trust relationship with another neighboring party P1, P2, P3.

Figure 4 shows a schematic of each of a root element 210, 215, of a mesh element 210, 211, of a regular sibling 210, 212, of a self-revocation element 210, 230 and of a revocation element 210, 235 of a mesh 200 as being comprised by a computer-readable storage medium 50 according to an aspect of the disclosure. The mesh 200 is described with reference to Figures 2 and 3. Figure 4 is described under reference to Figures 1 to 3 and the description thereof. Therein, the root element 210, 215, the mesh element 210, 211, the regular sibling 210, 212, the self-revocation element 210, 230 and/or the revocation element 210, 235 may be comprised by an arbitrary party chain 205, 206a, 206b of any party P1, P2, P3.

The mesh 200 is a data structure. The mesh 200 comprises a plurality of elements 210, wherein each of the elements 210 is a sub data structure, i.e., a component, of the mesh 200. Elements 210 are schematically indicated in Figure 4. Therein, Figure 4 (A) illustrates the structure of the root element 210, 215, Figure 4 (B) illustrates the structure of the mesh element 210, 211, Figure 4 (C) illustrates the structure of the regular sibling 210, 212, Figure 4 (D) illustrates the structure of the self-revocation element 210, 230 and Figure 4 (E) illustrates the structure of the revocation element 210, 235. In addition to the data structure of the elements 210, each of Figures 7 (A) to 7(E) shows a certificate chain, also called chain of trust, below the respective representation of the element 210.

Figure 4 (A) illustrates the root element 210, 215.

The root element 210, 215 comprises a party identity PID. The party identity PID is unique for the party P1, P2 being represented by the element 210, 215. The party identity PID may comprise a company name, a random number and/or a combination thereof.

The root element 210, 215 comprises an element unique identifier EUID. The element unique identifier EUID is unique for the element 210, 215 and accordingly generated for each element 210, 215.

The root element 210, 215 comprises a root public key RPK. The root public key RPK is adapted to validate a signature S being signed by a root certification authority RCA of the respective party P1, P2 being represented by the element 210, 215.

The root element 210, 215 comprises a neighbor hash NH as a hash value of an element 210 to which the root element 210, 215 is optionally be linked. The neighbor hash NH provides a verifiable and trustworthy evidence for a linked element 210. A hash calculation excludes the link values of the linked element 210, since these values may alter during the mesh usage.

The root element 210, 215 comprises a neighbor root hash NRH as a hash value of a root element 210, 216a, 216b to which the root element 210, 215 is optionally be linked. The neighbor root hash NRH provides a verifiable and trustworthy evidence for the linked root element 210, 216a, 216b. A hash calculation excludes the link values of the linked root element 210, 216a, 216b, since these values may alter during the mesh usage.

The root element 210, 215 comprises a timestamp TS. The timestamp TS indicates the element creation optionally using unified time-scheme.

The root element 210, 215 comprises properties P. A property may be an element characteristic according to network needs. The property P may comprise a search limit flag. The search limit flag of an element 210 may be set in accordance with a party P1, P2 to which the element 210 is linked. This may prevent the linked party to serve as a trust proxy, if another party chain 205, 206a may be reached over the linked element 210. The property P may comprise a device number of the device 500, 550 to which the element 210 relates and which may be used to limit a trust-relation in relation to the device 500, 550, instead of in relation to the party P1, P2. The property P may comprise a device certification authority identity and/or a device certification authority public key. This may limit the trust relationship to devices 500, 550 with device certificates DC being signed by the device certification authority DCA. Therein, the device certification authority DCA may be divided into a plurality of sub device certification authorities, which may be used to limit searching a trust relationship in the mesh 200 and which may enable a plurality of different links between neighboring party chains 205, 206a.

The root element 210, 215 comprises a signature S. The signature S is created by a root certification authority RCA with a root private key of the party P1, P2 being represented by the root element 210, 215 as schematically indicated by the arrow from the root certification authority RCA to the root public key RPK. The signature S is verifiable with a corresponding root public key of the root certification authority RCA as schematically indicated by the arrow from the root public key RPK to the signature S. Signature calculation excludes the link values of the element 210, since these values may alter during the mesh usage.

The root element 210, 215 comprises a plurality of links NRL, NL, SL. Links define the relationships between elements 210 and allow optimized navigation within the mesh 200. Therein, the root element 210, 215 comprises a neighbor link NL, i.e., a link to an element 210 of a different optionally trusted party chain 205, 206a, 206b, optionally a neighbor root link NRL, i.e., a link to a root element 210, 216a, 16b of a different (trusted) party-chain 205, 206a, 206b, and a sibling link SL, i.e., a link to the successor element of the same party chain 205, 206a, 206b. Therein, the sibling link SL may be set only after the creation of the successor element.

As shown in the chain of trust, the root certification authority RCA is enabled to sign a certificate of a mesh certification authority MCA and to sign a certificate of a device certification authority DCA. The device certification authority DCA is enabled to sign a device certificate DC which may be stored, together with the root certification authority RCA certificate and the device certification authority DCA certificate, on an electronic device 500, 550.

Figure 4 (B) illustrates the mesh element 210, 211. The mesh element 210, 211 is described with reference to the root element 210, 215 as described with reference to Figure 4 (A). Therein, the mesh element 210, 211 element comprises the party identity PID, the element unique identifier EUID, the neighbor hash NH, the neighbor root hash NRH, the timestamp TS, the properties P, the neighbor root link NRL, the neighbor link NL and the sibling link SL as explained above.

The mesh element 210, 211 comprises a mesh public key MPK. The mesh public key MPK is adapted to validate a signature S being signed by the mesh certification authority MCA of the respective party P1, P2 being represented by the element 210, 211.

The mesh element 210, 211 comprises a predecessor sibling hash PSH, for example being a root hash RH, i.e., a hash value of the root element 210, 215 being a predecessor of the mesh element 210, 211.

The mesh element 210, 211 comprises a signature S. The signature S is created by a root certification authority RCA with a root private key of the party P1, P2 being represented by the mesh element 210, 211. The signature S is verifiable with a corresponding mesh public key of the mesh certification authority MCA, e.g., as being comprised by the mesh element 210, 211 as described with reference to Figure 4 (B).

As shown in the chain of trust, the root certification authority RCA is enabled to sign a certificate of a mesh certification authority MCA and to sign a certificate of a device certification authority DCA. The device certification authority DCA is enabled to sign a device certificate DC which may be stored, together with the root certification authority RCA certificate and the device certification authority DCA certificate, on an electronic device 500, 550.

Figure 4 (C) illustrates the regular sibling 210, 212. The regular sibling 210, 212 is described with reference to the mesh element 210, 211 as described with reference to Figure 4 (B). Therein, the regular sibling 210, 212 element comprises the party identity PID, the element unique identifier EUID, the neighbor hash NH, the predecessor sibling hash PSH, the neighbor root hash NRH, the timestamp TS, the properties P, the neighbor root link NRL, the neighbor link NL and the sibling link SL as explained above.

The regular sibling 210, 212 comprises a mesh public key MPK. The mesh public key MPK is adapted to validate a signature S being signed by the mesh certification authority MCA of the respective party P1, P2 being represented by the element 210, 212.

The regular sibling 210, 212 comprises a signature S. The signature S is created by a mesh certification authority MCA by using mesh private key of the party P1, P2 being represented by the mesh element 210, 212. The signature S is verifiable with a corresponding mesh public key of the mesh certification authority MCA, e.g., as being comprised by the root element 210, 215 as described with reference to Figure 4 (A).

As shown in the chain of trust, the root certification authority RCA is enabled to sign a certificate of a mesh certification authority MCA and to sign a certificate of a device certification authority DCA. The device certification authority DCA is enabled to sign a device certificate DC which may be stored, together with the root certification authority RCA certificate and the device certification authority DCA certificate, on an electronic device 500, 550.

The electronic device 500, 550 comprises the root certificate stored in a one-time-programmable memory. This may ensure the authenticity of the root certificate and the root public key RPK of the root element 210, 215 being referenced by the root certificate. The root public key RPK may be used to validate the mesh element 210, 211 by validating its signature S. The mesh public key MPK of a validated mesh element 210, 212 may be used to validate the regular sibling 210, 212 by validating its signature S. Via links NL, NRL to a neighbor party chain 206a, 206b, an element 210, e.g., the mesh element 210, 211 or the regular sibling 210, 212, may use the neighbor hashes NH, RNH and signatures S to validate an element 210 of the neighbor party chain 206a, 206b. Since the chain of trust is presented when a connection between devices 500, 550 of the parties P1, P2 is established by using a mesh 200 as explained with reference to Figure 2, the chain of trust of a second electronic device 550 of the second party P2 may be validated by assessing the root public key RPK and the signature S of the root certificate of the second electronic device 550 with the root public key RPK of the second root element 210, 216. This enables to validate the chain of trust including the device certificate DC. The connected devices 500, 550 may challenge each other to assess the correctness of a device private key.

Figure 4 (D) illustrates the self-revocation element 210, 230. The self-revocation element 210, 230 is described with reference to the root element 210, 215 as described with reference to Figure 4 (A) and with reference to the regular sibling 210, 212 as described with reference to Figure 4 (C). Therein, the self-revocation element 210, 230 element comprises the party identity PID, the element unique identifier EUID, the root public key RPK and the timestamp TS, and the sibling link SL as described with reference to the root element 210, 215 and the predecessor sibling hash PSH as described with reference to the regular sibling 210, 212.

The self-revocation element 210, 230 comprises a self-revocation property P, SR. I.e., alternatively or additionally to the properties P as described with reference to the root element 210, 215, the self-revocation element 210, 230 comprises a flag that indicates that a trust relationship based on an element 210 and/or elements 210 preceding the self-revocation element 210, 230 is to be revoked. The property P may enable a revocation of a trust relationship to a specific device and/or group of devices, instead of revoking the trust relationship with a different party in total. Additionally, the property P may comprise the auxiliary revocation data referencing the compromised item, e.g., a part of a PKI that has been compromised. The properties P may contain the compromised certificate reference.

The self-revocation element 210, 230 comprises a void neighbor link NL, a void neighbor root link NRL, a void neighbor hash NH and a void neighbor root hash NRH. Alternatively, and as illustrated in Figure 4 (D), the self-revocation element 210, 230 does not comprise a neighbor link NL, a neighbor root link NRL, a neighbor hash NH and a neighbor root hash NRH.

Figure 4 (E) illustrates the revocation element 210, 235. The revocation element 210, 235 is described with reference to the mesh element 210, 211 as described with reference to Figures 4 (B). Therein, the revocation element 210, 235 element comprises the party identity PID, the element unique identifier EUID, the mesh public key MPK, the neighbor hash NH, the neighbor root hash NRH, the timestamp TS, the neighbor root link NRL, the neighbor link NL and the sibling link SL as described with reference to the mesh element 210, 211. Furthermore, the revocation element 210, 235 comprises the predecessor sibling hash PSH as described with reference to the regular sibling 210, 212, i.e., the predecessor sibling hash PSH may not necessarily be the root hash RH.

The revocation element 210, 235 comprises a revocation property P, RE. I.e., alternatively or additionally to the properties P as described with reference to the mesh element 210, 211 and thus to the root element 210, 215, the revocation element 210, 235 comprises a flag that indicates that a trust relationship based on an element 210 being linked by the revocation element 210, 235 is to be revoked. The property P may enable a revocation of a trust relationship to a specific device and/or group of devices, instead of revoking the trust relationship with a different party in total. Additionally, the property P may comprise the auxiliary revocation data referencing the compromised item, e.g., a part of a PKI that has been compromised. The properties P may contain the compromised certificate reference.

Regular siblings 210, 212 comprise the hash of the party-chain predecessor which may be a mesh element 210, 211, a revocation element 210, 235, a self-revocation element 210, 230 or another regular sibling 210, 212. All regular siblings 210, 212 and the revocation element 210, 235 are signed by a mesh certification authority MCA, of the corresponding party P1, P2 and comprises a mesh certification authority MCA public key.

Optionally, one or more of the above-described data may be dispensed with and/or be void. For example, a sibling link of a last element 210 of a party chain 205, 206a, 206b may be void, since no successive element 210 in the party chain 205, 206a, 206b. Similarly, a neighbor root link NRL of a root element 210, 215 may be void, as the neighboring root element 210, 216a, 216b may be linked by another element 210 within the first party chain 205.

Figure 5 shows a schematic of a search method 600 according to an aspect of the disclosure. The search method 600 is a method for an electronic device 500 of a first party P1 to search a trust relationship with a second electronic device 550 of a second party P2, wherein the electronic device 500 comprises a memory 505 storing a mesh 200. Such a mesh 200 is described with reference to Figures 2 and 3 and elements 210 of the mesh 200 are described with reference to Figure 4. Figure 5 is described under reference to Figures 1 and 4 and the description thereof.

The search method 600 identifies direct trusted relationships and/or indirect trusted relationship, i.e., trusted relationships over intermediate parties by identifying the linkage, i.e., the link and/or link chain, between an own root element and an element of the opposite party.

In Figure 5, the search method 600 comprises: iterating 610, starting with the first root element 210, 215 of the mesh 200, through the first party chain 205. I.e., the search method 600 applies a breadth-first search starting with the own root element 210, 250. At first, the own party chain 205 will be processed by following the sibling links SL.

The search method 600 comprises following 620 any neighbor link NL of the elements 210 of the first party chain 205 to second elements 210 of the second party chain 206a. By following the neighbor and neighbor root links NRL of each element 210 pairs of neighbor elements 210 and root elements 216a, 216b will be validated. Validation comprises hash, signature, and element parameter evaluation.

The search method 600 comprises storing 630, as a trust list, validated second elements 210 of the second party chain 206b and the corresponding second root element 216a. Found pairs of elements 210 of different party chains 205, 206a, 206b will be stored into the trust list as an intermediate result collection if the validation was successful.

The search method 600 comprises removing 640, from the trust list, any information relating to an element 210 of the second party chain 206a preceding the self-revocation element 210, 230 of the second party chain 206a and/or relating to a second element 210 of the second party chain 206a being linked by a revocation element 210, 235 of the first party chain 205. If a revocation element 210, 235 with revocation property P, RE has been found, the element 210 being linked by the revocation element 210, 235 will be removed from the intermediate result collection. If a self-revocation element 210, 230 with self-revocation property P, SR has been found in neighbor party-chain 206a, 206b, all elements found before the self-revocation element 210, 230 will be removed from the collection, i.e., from the trust list.

The search method 600 comprises iterating 650, starting from an element 210 succeeding the self-revocation element 210, 230 of the second party chain 206a, through the second party chain 206a. The search method 600 comprises iterating 655, starting from an element 210 succeeding a revocation element 210, 235 of the first party chain 205, through the first party chain 205. Alternatively, the order of the above-mentioned steps may be reversed. If an element 210 of the sought party, i.e., the communication partner, appears in the trust list, the search method 600 performs scanning the rest of the corresponding party chain 206a, 206b for a self-revocation element 210, 230. If a self-revocation element 210, 230 has been found, all elements of the party chain 206a, 206b with the self-revocation element 210, 230 found before the self-revocation element 210, 230 will be removed from the trust list.

The search method 600 comprises outputting 660, based on the trust list, a trust relationship result. The search method 600 continues with chain of trust validation of the communication partner, if being present in the trust list, starting with the root certificate and following the certificate chain until the device certificate DC. If this validation step is successful, operation returns "TRUE" as result. If the sought element 210 has not been found yet, the operation will be applied to each party chain 206a, 206b which elements 210 are part of the trust list as an iterative operation. The search 600 terminates with result "FALSE" if all elements 210 of the current party chain 205 has been processed and the trust list is empty. It is possible to limit the number of iterations by application of the search depth parameter. E.g., depth "1" provides positive result only in case of direct trusted relationship, i.e., trusted relationships between neighboring party chains 205, 206a, 206b. Choice of depth value depends on desired quotient between confidence, performance and flexibility. Other criteria to limit the search propagation are also possible, e.g., application of intermediate party blacklists, whitelists, special element properties, such as terminal element without allowance to supply further neighbor links, min. number of siblings, etc. Criteria for the search limitation can be selected individually by each mesh participant even on the level of a concrete product. I.e., different devices 500, 550 of the same manufacturer may apply different search limitation criteria, depending on the demands of the concrete product.

Therein, the mesh 200 may comprise a plurality of more than two party chains 205, 206a, 206b as shown in Figure 3. Therein, the following 620 of the neighbor link NL of the elements 210 of the first party chain 205 to second elements 210 of the second party chain 206b is succeeded by following 620 of the neighbor link NL of the elements 210 of the second party chain 206a to third elements 210 of a third party chain 206b representing a third party P3.

### List of reference signs (Part of the description)

- 50: storage medium

- 200: mesh

- 201: host party
- 202a: guest party
- 202b: guest party
- 205: party chain
- 206a: party chain
- 206b: party chain
- 210: element
- 211: mesh element
- 212: regular sibling
- 215: root element
- 216a: root element
- 217: first element
- 218a: second element
- 219: first linked element
- 220a: second linked element
- 221: first last element, last element of the first party chain
- 222a: second last element, second element of the second party chain
- 230: self-revocation element
- 235: revocation element
- 236: trusted first element
- 237a: trusted second element

- 500: electronic device
- 505: memory
- 550: second electronic device
- 555: memory

- 600: search method
- 610: iterating
- 620: following
- 620': following
- 630: storing
- 640: removing
- 650: iterating
- 655: iterating
- 660: outputting

- 800a: vehicle
- 800b: utility vehicle
- 850a: vehicle
- 850b: utility vehicle

- RCA: root certification authority
- MCA: mesh certification authority
- DCA: device certification authority
- DC: device certificate

- NL: neighbor link
- NRL: neighbor root link
- SL: sibling link

- NH: neighbor hash
- NRH: neighbor root hash
- PSH: predecessor sibling hash
- RH: root hash

- MH: mesh hash value

- EUID: element unique identifier
- PID: party identity
- P: properties
- PK: public key
- MPK: mesh public key
- RP: revocation property
- RPK: root public key
- S: signature
- SR: self-revocation property
- TS: timestamp

- P1: first party
- P2: second party

## Claims

1. A computer-readable medium (50) comprising a mesh (200) with a public key infrastructure relating to trust relationships between a first party (P1) and a second party (P2), wherein the mesh (200) comprises:
- a first party chain (205) representing the first party (P1) and comprising a first root element (210, 215), a first mesh element (210, 211) and a first element (210);
- a second party chain (206a) representing the second party (P2) and comprising a second root element (210, 216a) and a second element (210, 218a); wherein
- each of the root elements (210, 215, 216a) comprises a signature (S) signed by a root certification authority (RCA) of the respective party (P1, P2) and a corresponding root public key (RPK) for validating signatures (S) signed by the corresponding root certification authority (RCA);
- the first mesh element (210, 211) comprises a signature (S) signed by the root certification authority (RCA) of the first party (P1), a mesh public key (MPK) for validating a signature (S) signed by a mesh certification authority (MCA) of the first party (P1) and a predecessor sibling hash (PSH);
- the first element (210) comprises a signature (S) signed by the mesh certification authority (MCA) of the first party (P1), the mesh public key (MPK), a predecessor sibling hash (PSH) of a preceding element (210) in the first party chain (205), and a neighbor link (NL) to a second linked element (210, 220a) of the second party chain (206a);
- the second element (210, 218a) comprises a neighbor link (NL) to a first linked element (210, 219) of the first party chain (205); and
- the second party chain (206a) further comprises a self-revocation element (210, 230) being a successor of the second linked element (210, 220a) and comprising a self-revocation property (P, SR) and/or the first party chain (205) further comprises a revocation element (210, 235) being a successor of the first element (210, 212) and comprising a revocation property (P, RP).

2. A computer-readable medium (50) as claimed in claim 1, wherein the self-revocation element (210, 230) comprises a void neighbor link (NL) a void neighbor root link (NRL), a void neighbor hash (NH) and/or a void neighbor root hash (NRH).

3. A computer-readable medium (50) as claimed in claim 1 or 2, wherein the revocation element (210, 235) comprises a neighbor link (NL) to the second linked element (210, 220a) and/or a neighbor root link (NRL) to the second root element (210, 216a).

4. A computer-readable medium (50) as claimed in any one of the preceding claims, wherein the second party chain (206a) comprises a trusted second element (210, 237a) with a neighbor link (NL) to a any element (210) of the first party chain (205) and/or the first party chain (205) comprises a trusted first element (210, 236) with a neighbor link (NL) to a trusted second element (210, 237a) of the second party chain (206a).

5. A computer-readable medium (50) as claimed in any one of the preceding claims, wherein the second party chain (206a) comprises a trusted second element (210, 237a) with a neighbor link (NL) to a any element (210) of the first party chain (205), and the trusted second element (210, 237a) is a last element (210, 222a) of the second party chain (206a), a mesh element (210, 211) and/or a successor of the self-revocation element (210, 230).

6. A computer-readable medium (50) as claimed in any one of the preceding claims, wherein the second party chain (206a) comprises a trusted second element (210, 237a) with a neighbor link (NL) to the revocation element (210, 235).

7. A computer-readable medium (50) as claimed in any one of the preceding claims, wherein the self-revocation element (210, 230) comprises a signature (S) signed by the root certification authority (RCA) of the second party (P2) and a corresponding root public key (RPK) for validating signatures (S) signed by the root certification authority (RCA) of the second party (P2) and/or the revocation element (210, 235) with a signature (S) signed by the mesh certification authority (MCA) of the first party (P1) and a corresponding mesh public key (MPK) for validating signatures (S) signed by the mesh certification authority (MCA) of the first party (P1).

8. Search method (600) for an electronic device (500) of a first party (P1) to search a trust relationship with a second electronic device (550) of a second party (P2), wherein the electronic device (500) comprises a memory (505) storing a mesh (200) as being comprised by the computer-readable medium (50) as claimed in any one of the preceding claims, wherein the search method (600) comprises:
- iterating (610), starting with the first root element (210, 215) of the mesh (200), through the first party chain (205);
- following (620) any neighbor link (NL) of the elements (210) of the first party chain (205) to second elements (210) of the second party chain (206a);
- storing (630), as a trust list, validated second elements (210) of the second party chain (206a);
- removing (640), from the trust list, any information relating to an element (210) of the second party chain (206a) preceding the self-revocation element (210, 230) of the second party chain (206a) and/or relating to a second element (210) of the second party chain (206a) being linked by a revocation element (210, 235) of the first party chain (205); and
- outputting (660), based on the trust list, a trust relationship result.

9. Search method (600) as claimed in claim 8, wherein the method (600) further comprises:
- iterating (650), starting from an element (210) succeeding the self-revocation element (210, 230) of the second party chain (206a), through the second party chain (206a), and/or
- iterating (655), starting from an element (210) succeeding the revocation element (210, 235) of the first party chain (205), through the first party chain (205).

10. Search method (600) as claimed in any one of claims 8 or 9, wherein the mesh (200) comprises a plurality of more than two party chains (205, 206a, 206b), wherein the following (620) of the neighbor link (NL) of the elements (210) of the first party chain (205) to second elements (210) of the second party chain (206b) is succeeded by following (620') of the neighbor link (NL) of the elements (210) of the second party chain (206a) to third elements (210) of a third party chain (206b) representing a third party (P3).

11. Computer program for an electronic device (500, 550), comprising instructions which, when the program is executed by a processor, causes the processor to carry out the method (600) of claims 8 to 10.

12. Electronic device (500, 550), comprising and/or being adapted to read a computer-readable medium (50) comprising a mesh (200) as claimed in any one of claims 1 to 7.

13. Electronic device (500, 550) as claimed in claim 12, wherein the electronic device (500, 550) is adapted to perform the method (600) as claimed in any one of claims 8 to 10.

14. First vehicle (800a), in particular utility vehicle (800b), of a first party (P1), wherein the first vehicle (800a), in particular utility vehicle (800b), comprises an electronic device (500, 550) as claimed in claim 12 or 13.
